(19)

Europäisches
Patentamt
European
Patent Office
Office européen
des brevets

(11) **EP 3 508 557 A1**

(12) **EUROPEAN PATENT APPLICATION**

(43) Date of publication:
**10.07.2019 Bulletin 2019/28**

(21) Application number: **19150549.4**

(22) Date of filing: **07.01.2019**

(51) Int Cl.:
*C10G 9/20* (2006.01)          *B21D 53/02* (2006.01)
*B21D 53/06* (2006.01)          *B21C 1/22* (2006.01)
*F28F 1/40* (2006.01)          *F28F 1/10* (2006.01)
*G06F 17/50* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.01.2018 GB 201800342**

(71) Applicant: **Paralloy Limited
Billingham TS23 4DA (GB)**

(72) Inventors:
• **FLAHAUT, Dominique
Billingham, TS23 4DA (GB)**
• **HUMPHREYS, Nicholas
Billingham, TS23 4DA (GB)**

(74) Representative: **HGF Limited
Fountain Precinct
Balm Green
Sheffield S1 2JA (GB)**

(54) **PIPES FOR CHEMICAL PROCESSING**

(57)      A method for designing a pipe for use in chemical processing is disclosed. The pipe has a generally annular cross-section comprising an annular outer wall, and further comprising a number of fins provided on the inner surface of the outer wall. The geometry of the pipe is defined by one or more geometric parameters. The method comprises selecting values for the one or more parameters that minimise or maximise an optimisation function. The one or more parameters comprise one or more of: the number of fins, $N_{fins}$; the fin height $H_{fin}$; the inner diameter from fin peak to fin peak, $D_{peak}$; the inner diameter from fin trough to fin trough, $D_{trough}$; the inner diameter from fin mid-point to fin mid-point, $D_{mean}$; the fin trough radius of curvature, $R_{trough}$; the fin peak radius of curvature, $R_{peak}$; the outer diameter, $D_{overall}$; and the outer wall thickness, MSW. The optimisation function comprises one or more of:

$$PAW = \left( \frac{Perimeter}{Area} \middle/ Weight \right) \qquad \text{(i)}$$

$$Optimal = \frac{PAW \cdot R_{trough}}{H_{fin}} \qquad \text{(ii)}$$

$$Removal = Area - \pi \left( \frac{D_{peak}}{2} \right)^2 \qquad \text{(iii),}$$

where "Perimeter" denotes the internal cross-sectional perimeter, "Area" denotes the internal cross-sectional area, and "Weight" denotes the weight per unit length. The method may further comprise making a pipe according to the design.

EP 3 508 557 A1

Figure 2

**Description**

BACKGROUND

Field

Certain examples of the present disclosure provide methods, apparatus and/or systems for designing one or more pipes or tubes for use in the chemical processing industry (e.g. for use in petrochemical processing). Certain examples of the present disclosure provide methods, apparatus and/or systems for manufacturing such a pipe or tube according to such a design. Certain examples of the present disclosure provide one or more such pipes or tubes manufactured according to such a design.

Description of the Related Art

Various techniques are known for obtaining useful products or raw materials from crude oil. One class of such techniques is known as cracking, in which relatively complex organic molecules (e.g. relatively long-chain hydrocarbons such as butane) contained in the crude oil are broken down into simpler molecules (e.g. relatively light hydrocarbons such as ethylene). For example, steam cracking is a type of cracking process in which the molecules are broken down at a relatively high temperature using pyrolysis. In a typical steam cracking process, a feedstock, such as ethane, propane or butane, is mixed with steam and passed through a tube or pipe located within a furnace. The heat generated by the furnace outside the pipe is transferred to the feedstock as the feedstock flows through the pipe, thereby causing the feedstock to heat up to the required temperature.

The rate at which the feedstock is heated, for example measured in terms of unit temperature increase per unit distance travelled by the feedstock along the pipe, may be referred to as the heat transfer rate. The heat transfer rate depends on a number of factors, including the temperature of the furnace, the thermophysical properties of the pipe, the pipe geometry and heat transfer coefficients between solid and fluids for example. To maximise process efficiency, it is preferable to maximise the heat transfer rate for a given furnace temperature, in order to maximise the rate of chemical production for a given rate of furnace fuel consumption. Alternatively, it is preferable to minimise the required furnace temperature to achieve a given heat transfer rate, in order to minimise the rate of furnace fuel consumption for a given rate of chemical production.

In relation to the pipe geometry, a greater heat transfer rate may be achieved by increasing the internal surface area of the tube, thereby increasing the potential for heat transfer from the furnace to the feedstock at a constant heat flux. On the other hand, it is also preferable to minimise the total volume or weight of the pipe in order to reduce manufacturing material costs. Also, the pipe design may be subject to certain constraints due to limitations in the pipe manufacturing process.

Therefore, what is desired is a technique for designing a pipe or tube for optimising the heat transfer rate (e.g. by maximising the internal surface area) without excessively increasing the tube weight. What is also desired is a technique for manufacturing a pipe or tube according to a design for optimising the heat transfer rate. What is also desired is a pipe or tube manufactured according to a design for maximising the heat transfer rate.

SUMMARY

It is an aim of certain examples of the present disclosure to address, solve and/or mitigate, at least partly, at least one of the problems and/or disadvantages associated with the related art, for example at least one of the problems and/or disadvantages described herein. It is an aim of certain examples of the present disclosure to provide at least one advantage over the related art, for example at least one of the advantages described herein.

The present invention is defined in the independent claims. Advantageous features are defined in the dependent claims.

Certain examples of the present disclosure provide a computer program comprising instructions which, when executed by a processor, cause the processor to perform a method according to any one or more embodiments, examples, aspects and/or claims disclosed herein. Certain examples of the present disclosure provide a computer readable storage medium having such a computer program stored thereon.

Other aspects, advantages, and salient features of the invention will become apparent to those skilled in the art from the following detailed description, which, taken in conjunction with the annexed drawings, disclose examples of the present disclosure.

BRIEF DESCRIPTION OF THE DRAWINGS

The above and other aspects, and features and advantages of certain examples of the present disclosure will be more apparent from the following detailed description when taken in conjunction with the accompanying drawings, in which:

Figure 1 is a cross-sectional view of a first type of pipe or tube;

Figure 2 is a cross-sectional view of a second type of pipe or tube;

Figure 3 is a diagram illustrating the inter-dependence of various parameters, values and functions used in an algorithm according to an example of the present disclosure;

Figure 4 illustrates one sector of the cross-sectional pipe geometry illustrated in Figure 2; and

Figure 5 is a diagram illustrating the inter-dependence between auxiliary variables A-F and a-k denoting certain geometric features of the sector illustrated in Figure 4.

DETAILED DESCRIPTION

The following description of examples of the present disclosure, with reference to the accompanying drawings, is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the examples described herein can be made.

The same or similar components may be designated by the same or similar reference numerals, although they may be illustrated in different drawings.

Detailed descriptions of techniques, structures, constructions, functions or processes known in the art may be omitted for clarity and conciseness, and to avoid obscuring the subject matter of the present disclosure.

The terms and words used herein are not limited to the bibliographical or standard meanings, but, are merely used to enable a clear and consistent understanding of the examples disclosed herein.

Throughout the description and claims, the words "comprise", "contain" and "include", and variations thereof, for example "comprising", "containing" and "including", means "including but not limited to", and is not intended to (and does not) exclude other features, elements, components, integers, steps, processes, functions, characteristics, and the like.

Throughout the description and claims, the singular form, for example "a", "an" and "the", encompasses the plural unless the context otherwise requires. For example, reference to "an object" includes reference to one or more of such objects.

Throughout the description and claims, language in the general form of "X for Y" (where Y is some action, process, function, activity or step and X is some means for carrying out that action, process, function, activity or step) encompasses means X adapted, configured or arranged specifically, but not necessarily exclusively, to do Y.

Features, elements, components, integers, steps, processes, functions, characteristics, and the like, described in conjunction with a particular aspect, embodiment, example or claim are to be understood to be applicable to any other aspect, embodiment, example or claim disclosed herein unless incompatible therewith.

Examples of the present disclosure may be implemented in the form of any suitable method, system and/or apparatus for use in chemical processing (e.g. petrochemical processing). For example, a pipe designed and/or manufactured according to the techniques disclosed herein may be applied to steam cracking for the efficient transfer of heat generated by a furnace on the exterior of the pipe to feedstock flowing through the pipe.

A pipe according to examples of the present disclosure may be designed using any suitable method or algorithm comprising steps for designing such a pipe. The methods or algorithms described herein may be implemented in any suitably arranged apparatus or system comprising means (e.g. unit, module, processor, controller, etc.) for carrying out the method or algorithm steps. A pipe according to examples of the present disclosure may be manufactured using any suitably arranged apparatus or system comprising means (e.g. unit, module, processor, controller, etc.) for manufacturing such a pipe.

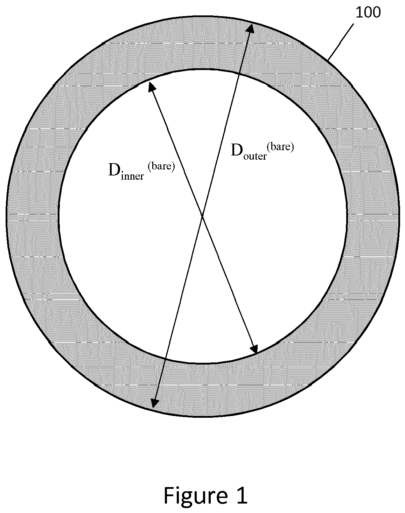

Figure 1 is a cross-sectional view of a first type of pipe or tube 100, which may be referred to as a "bare pipe". As shown in Figure 1, the pipe cross-section has an annular form comprising a circular outer circumference having a diameter $D_{outer}^{(bare)}$ and a circular inner circumference having a diameter $D_{inner}^{(bare)}$. The pipe 100 of Figure 1 may have a constant cross-section along its length.

A number of physical and/or geometric properties of the pipe illustrated in Figure 1 are given by Equations 1-6 below.

Pipe wall thickness:

$$MSW^{(bare)} = D_{outer} - D_{inner} \qquad \text{(Equation 1)}$$

Circumference of inner diameter:

$$Perimeter^{(bare)} = \pi D_{inner} \qquad \text{(Equation 2)}$$

Internal cross-sectional area of pipe

$$Area^{(bare)} = \pi \left(\frac{D_{inner}}{2}\right)^2 \qquad \text{(Equation 3)}$$

Ratio of perimeter to area:

$$PA^{(bare)} = \frac{4}{D_{inner}} \qquad \text{(Equation 4)}$$

Weight of tube per unit length:

$$Weight^{(bare)} = \pi \left(\left(\frac{D_{outer}}{2}\right)^2 - \left(\frac{D_{inner}}{2}\right)^2\right) \rho$$

(Equation 5)

PAW:

$$PAW^{(bare)} = \left(\frac{Perimeter^{(bare)}}{Area^{(bare)}} \middle/ Weight^{(bare)}\right)$$

(Equation 6)

In Equation 5, $\rho$ denotes the density of the pipe material.

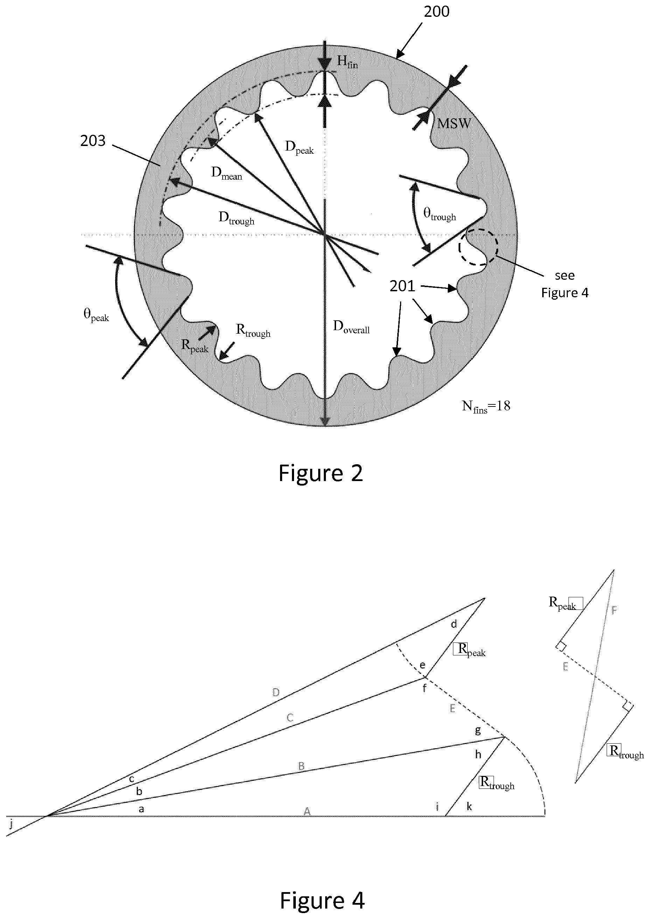

Figure 2 is a cross-sectional view of a second type of pipe or tube 200, which may be referred to as a "PEP pipe". As shown in Figure 2, the pipe cross-section has an annular form comprising a circular outer circumference (although in alternative examples, the outer circumference may be any suitable shape, for example polygonal) and a generally circular inner circumference. However, unlike the first type of pipe 100 illustrated in Figure 1, the second type of pipe 200 illustrated in Figure 2 comprise a set of fins 201 provided around its inner circumference. The presence of the fins 201 increases the internal surface area of the pipe 200, thereby increasing the heat transfer efficiency of the pipe 200. In addition, the shape of the fins 201 facilitates the removal during pipe maintenance of a solid carbon layer that tends to build-up on the interior of the pipe 200 during the pyrolysis process.

The pipe 200 of Figure 2 may have a constant cross-section along its length. Alternatively, in certain examples, the cross-section of the pipe 200 may vary, for example in size, shape and/or orientation along its length. In some examples, the fins 201 may be provided linearly along the length of the pipe 200, while in other examples, the fins 201 may be arranged helically along the length of the pipe 200.

The profile of the fins 201 may have a generally sinusoidal-type shape. As shown in Figures 2 and 4, the fins 201 may comprise fin tips having a certain radius of curvature, fin troughs having a certain radius of curvature, and straight lines connecting the fin tips and the fin troughs. In the example illustrated in Figure 2, $N_{fins}$ fins 201 are arranged evenly around the inner circumference of the pipe 200 such that the pipe 200 has $N_{fins}$ degree rotational symmetry about its central axis. In addition, each individual fin 201 is symmetric about a line connecting the centre of the pipe 200 to the fin tip.

As illustrated in Figure 2, the geometry of the pipe 200 may be characterised by one or more parameters, for example including the following:

- $D_{overall}$ denotes the external diameter of the pipe 200;
- $D_{peak}$ denotes the internal diameter of the pipe 200, as measured from fin peak to fin peak;
- $D_{trough}$ denotes the internal diameter of the pipe 200, as measured from fin trough to fin trough;
- $D_{mean}$ denotes the mean of the internal diameters $D_{peak}$ and $D_{trough}$ of the pipe 200, i.e. $D_{mean} = \frac{1}{2}(D_{peak} + D_{trough})$;
- $H_{fin}$ denotes the height of each fin 201;
- MSW denotes the thickness or width of an outer wall portion 203 of the pipe 200, i.e. the radial distance between each fin trough and the exterior surface of the pipe 200;
- $R_{trough}$ denotes the radius of curvature of each fin trough;
- $R_{peak}$ denotes the radius of curvature of each fin peak; and
- $N_{fins}$ denotes the number of fins 201.

A certain pipe design may be defined by selecting certain values for the above parameters. The algorithm descried below may be used to select values for one or more of the parameters so as to optimise the geometry of the pipe 200 for the purpose of optimising performance (e.g. heat transfer efficiency) during use. In particular, as described further below, values of one or more parameters may be selected so as to maximise (or minimise) a certain function ("optimisation function") of those parameters, where the optimisation function is chosen so as to represent some desired characteristic or performance measure. As described further below, the selection of the parameter values may be subject to one or more constraints, which may include geometric constraints, manufacturing constraints and/or design constraints, for example. These constraints may restrict certain parameters and value to having values within a certain range or to take certain specific values.

In the following example, the algorithm is used to select values for parameters $H_{fin}$, $D_{mean}$, $R_{trough}$, $R_{peak}$ and $N_{fins}$, (which may be referred to as "primary parameters"), while MSW (which may be referred to as a "fixed parameter") is set to have a fixed value. The remaining variables, $D_{overall}$, $D_{trough}$ and $D_{peak}$, as well as certain other auxiliary parameters and values used in the algorithm, are dependent on the primary parameters and the fixed parameter. Three examples of an optimisation function are defined.

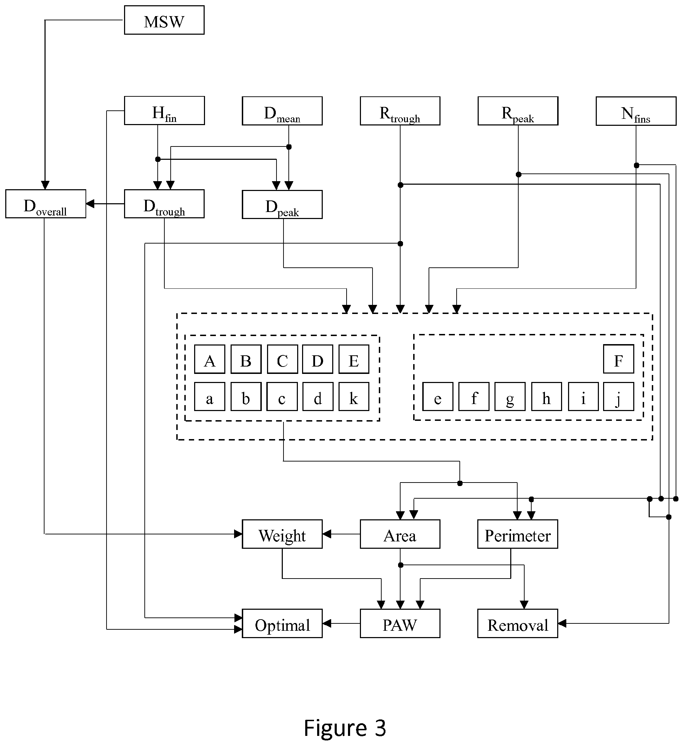

Figure 3 is a diagram illustrating the inter-dependence of the various parameters, values and functions used in the algorithm.

The first row of Figure 3 contains fixed parameter MSW, which as mentioned above, is a parameter whose value is fixed and an input to the algorithm.

The second row contains primary parameters $H_{fin}$, $D_{mean}$, $R_{trough}$, $R_{peak}$ and $N_{fins}$, which as mentioned above are parameters whose values are to be determined by the algorithm so as to optimise the pipe geometry. These parameters may be assigned initial values at the beginning of the algorithm, and the parameter values may be subsequently adjusted during execution of the algorithm so as to obtain optimum values.

The third row contains parameters $D_{overall}$, $D_{trough}$ and $D_{peak}$, which, as can be seen from Figure 3, are parameters that are dependent on certain primary parameters (i.e. $H_{fin}$ and $D_{mean}$) and the fixed parameter (MSW). These parameters may be calculated for convenience in performing subsequent calculations.

The fourth and fifth rows contain auxiliary parameters A-F (denoting lengths) and a-j (denoting angles), which, as described further below, correspond to certain geometric features of a sectoral decomposition of the pipe cross-section geometry. As can be seen from Figure 3, these auxiliary parameters are dependent on certain primary parameters (i.e. $R_{trough}$, $R_{peak}$ and $N_{fins}$), as well as certain dependent parameters (i.e. $D_{trough}$ and $D_{peak}$). Among these auxiliary parameters, parameters A-E, a-d and k are subsequently used to compute further values in the algorithm.

The sixth row contains three values (Weight, Area and Perimeter) which denote physical or geometrical properties of the pipe that are directly or indirectly dependent on the primary and fixed parameters. Specifically, "Weight" denotes the weight per unit length of the pipe, "Area" denotes the internal cross-sectional area of the pipe, and "Perimeter" denotes the internal perimeter length of the pipe cross-section. As shown in Figure 3, these values are dependent on certain primary parameters (i.e. $R_{trough}$, $R_{peak}$ and $N_{fins}$), one of the dependent parameters (i.e. $D_{overall}$), and certain auxiliary parameters (i.e. A-E, a-d and k).

The seventh row contains values (PAW, Optimal and Removal) corresponding to three optimisation functions, which as mentioned above represent certain desired characteristics or performance measures. These values are dependent directly or indirectly on the primary and fixed parameters, and by maximising or minimising these values, corresponding optimal values of the primary parameters may be obtained. Specifically, "PAW" denotes a ratio of perimeter to area to weight, "Optimal" denotes a value based on PAW, fin height and radius of curvature of the fin troughs, and "Removal" denotes the total cross-sectional area between the fins (i.e. the amount of material that has to be removed from between the fins when manufacturing the pipe).

The skilled person will appreciate that any suitable set of parameters may be selected for optimisation. In the example of Figure 3, $H_{fin}$ and $D_{mean}$ are optimised, while $D_{trough}$ and $D_{peak}$ are considered as dependent parameters. However, in alternative examples, $D_{trough}$ and $D_{peak}$ may be optimised, while $H_{fin}$ and $D_{mean}$ may be considered as dependent parameters, dependent on $D_{trough}$ and $D_{peak}$. More generally, in the case that a certain set of parameters are dependent on each other, the optimisation of one or more parameters in the set may be substituted for optimisation of certain other dependent parameters in the set. The skilled person will appreciate that there may be a degree of freedom in the selection of the parameters to optimise. For example, given a complete set of parameters $\{\pi\}$, a set of fixed parameters $\{\pi_{fixed}\}$ and a set of primary parameters for optimisation $\{\pi_{primary}\}$ may be selected such that the remaining parameters/variables/values $\{\pi_{dependent}\}$ may be derived entirely from $\{\pi_{fixed}\}$ and $\{\pi_{primary}\}$.

In the example of Figure 3, various dependent and auxiliary parameters/variables/values are computed, for example increase the convenience in computing further values. However, the skilled person will appreciate that, in certain examples, one or more of the dependent and auxiliary parameters need not be evaluated, for example if certain values (e.g. the optimisation functions) are expressed directly in terms of other values (e.g. the fixed parameters and the primary parameters to be optimised), without referring to intermediate expressions.

The algorithm will now be described in more detail. The algorithm may be implemented in any suitable manner.

In one example, the algorithm may be implemented in the form of a Microsoft Excel spreadsheet, in which the value of the fixed parameter and the initial values of the primary parameters may be input (e.g. by a user) into one or more cells of the spreadsheet, the calculation of the various parameter, values and functions may be performed using macros, and the optimisation (e.g. the search for parameter values that maximise or minimise a certain optimisation function) may be performed using an Excel function, such as "evolutionary solver" in Excel 2016. In this case, the following exemplary options may be used:

Options - "All methods"

- constraint precision = 0.00001
- use automatic scaling

Options = "Evolutionary"

- convergence = 0.00000001
- mutation rate = 0.1
- population size = 10000
- random seed = 0
- maximum time without improvement = 30
- require bounds on variables

In a first step, an appropriate value is assigned to fixed parameter MSW, and initial values are assigned to primary parameters $H_{fin}$, $D_{mean}$, $R_{trough}$, $R_{peak}$ and $N_{fins}$.

The value of the fixed parameter and the initial values of the primary parameters may be set based on estimated, expected or typical values and/or with reference to corresponding values of a bare pipe, for example according to the following:

- MSW=minimum allowable wall thickness value
- $H_{fin} = H_{fin}^{(estimate)}$, e.g. 3.0mm
- $D_{mean} = D_{mean}^{(estimate)} = D_{internal}^{(bare)}$, e.g. 120.6mm
- $R_{trough} = R_{trough}^{(estimate)}$, e.g. 2.0mm
- $R_{peak} = R_{peak}^{(estimate)}$, e.g. 1.0mm
- $N_{fins} = N_{fins}^{(estimate)} = D_{internal}^{(bare)}/2$, e.g. 60

In a second step, the values of dependent geometric parameters $D_{overall}$, $D_{trough}$ and $D_{peak}$ are calculated according to Equations 7-9 below:

$$D_{peak} = D_{mean} - H_{fin} \qquad \text{(Equation 7)}$$

$$D_{trough} = D_{mean} + H_{fin} \qquad \text{(Equation 8)}$$

$$D_{overall} = D_{trough} + 2 \cdot MSW \qquad \text{(Equation 9)}$$

In a third step, auxiliary parameters A-F and a-k are calculated according to Equations 10-26 below.

As mentioned above, these auxiliary parameters denote certain geometric features of a sectoral decomposition of the pipe cross-section geometry. Specifically, the cross-sectional geometry of the pipe may be split into a number of radially symmetric sectors (or sections), each sector being delimited by an area enclosed by (i) a first radial line extending from the central axis of the pipe through a fin trough, (ii) a second radial line extended from the central axis of the pipe through an adjacent fin peak, (iii) a first arc of radius ½ $D_{overall}$, and (iv) a second arc of radius ½ $D_{peak}$. Figure 4 illustrates one sector of the cross-sectional pipe geometry illustrated in Figure 2, where the lengths A-F and the angles a-k are indicated in Figure 4. The portion of the inner perimeter of the pipe 200 shown in Figure 4 (indicated by a dotted line in Figure 4) corresponds to a portion of the inner perimeter of the pipe 200 shown in Figure 2 (for example the portion within the dotted circle in Figure 2).

$$A = \frac{D_{trough}}{2} - R_{trough} \qquad \text{(Equation 10)}$$

$$B = \sqrt{R_{trough}^2 + A^2 - 2R_{trough}A\cos i} \qquad \text{(Equation 11)}$$

$$C = \sqrt{R_{peak}^2 + D^2 - 2R_{peak}D\cos d} \qquad \text{(Equation 12)}$$

$$D = \frac{D_{peak}}{2} + R_{peak} \qquad \text{(Equation 13)}$$

$$E = \sqrt{F^2 - \left(R_{trough} + R_{peak}\right)^2} \qquad \text{(Equation 14)}$$

$$F = \sqrt{A^2 + D^2 - 2AD\cos j} \qquad \text{(Equation 15)}$$

$$a = \cos^{-1}\left(\frac{R_{trough}^2 - A^2 - B^2}{-2AB}\right) \qquad \text{(Equation 16)}$$

$$b = j - c - a \qquad \text{(Equation 17)}$$

$$c = \cos^{-1}\left(\frac{R_{peak}^2 - C^2 - D^2}{-2CD}\right) \qquad \text{(Equation 18)}$$

$$d = 180 - i - j \qquad \text{(Equation 19)}$$

$$e = 180 - c - d \qquad \text{(Equation 20)}$$

$$f = 270 - e \qquad \text{(Equation 21)}$$

$$g = 180 - f - b \qquad \text{(Equation 22)}$$

$$h = 180 - a - i \qquad \text{(Equation 23)}$$

$$i = \cos^{-1}\left(\frac{D^2 - F^2 - A^2}{-2FA}\right) + \tan^{-1}\left(\frac{E}{R_{trough} + R_{peak}}\right) \qquad \text{(Equation 24)}$$

$$j = \frac{180}{N_{fins}} \qquad \text{(Equation 25)}$$

$$k = 180 - i \qquad \text{(Equation 26)}$$

Equations 10-26 may be evaluate in any suitable order such that all values required to evaluate a given Equation have been previously computed. For example, one exemplary order is indicated below:

| 1 | 2 | 3 | 4 | 5 | 6 | 7 | 8 | 9 | 10 | 11 | 12 | 13 | 14 | 15 | 16 | 17 |
|---|---|---|---|---|---|---|---|---|----|----|----|----|----|----|----|----|
| A | D | j | F | E | i | k | d | B | C  | a  | c  | b  | e  | f  | g  | h  |

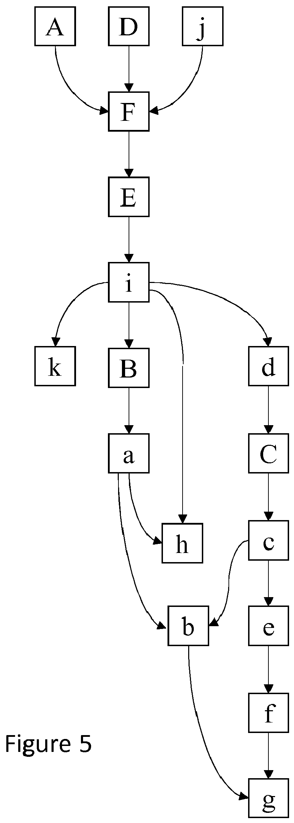

Figure 5 is a diagram illustrating the inter-dependence between auxiliary variables A-F and a-k according to Equations 10-26, thereby indicating the possible orders in which the auxiliary variables may be computed.

In a fourth step, the values "Weight", "Area" and "Perimeter", representing physical and/or geometric properties of the pipe may be calculated according to Equations 27-29 below.

$$Perimeter = 2N_{fins} \left( \frac{d}{180} \pi R_{peak} + \frac{k}{180} \pi R_{trough} + E \right) \qquad \text{(Equation 27)}$$

$$Area = N_{fins} \left( AB \sin a + BC \sin b + CD \sin c + \frac{k}{180} \pi R_{trough}^2 - \frac{d}{180} \pi R_{peak}^2 \right) \qquad \text{(Equation 28)}$$

$$Weight = \left( \pi \left( \frac{D_{overall}}{2} \right)^2 - Area \right) \rho \qquad \text{(Equation 29)}$$

In a fifth step, the values "PAW", "Optimal" and "Removal" are calculated according to Equations 30-32 below.

$$PAW = \left( \frac{\frac{Perimeter}{Area}}{Weight} \right) \qquad \text{(Equation 30)}$$

$$Optimal = \frac{PAW \cdot R_{trough}}{H_{fin}} \qquad \text{(Equation 31)}$$

$$Removal = Area - \pi \left( \frac{D_{peak}}{2} \right)^2 \qquad \text{(Equation 32)}$$

In a sixth step, the values of primary parameters $H_{fin}$, $D_{mean}$, $R_{trough}$, $R_{peak}$ and $N_{fins}$ are adjusted, and the second to sixth steps are repeated until the values of one or more of "PAW", "Optimal" and "Removal" are optimised. The values of $H_{fin}$, $D_{mean}$, $R_{trough}$, $R_{peak}$ and $N_{fins}$ for which PAW, Optimal or Removal are optimised may be selected as the final values for the primary parameters. This optimisation may be performed using any suitable technique, for example an evolutionary-type optimisation algorithm.

In order to compare a PEP pipe defined according to parameter values obtained using the above-described algorithm with a corresponding bare pipe, one or more ratio values may be computed according to Equations 33-36 below, which are based on the values computed according to Equations 2 and 27, Equations 3 and 28, Equations 5 and 29, and Equations 6 and 30.

Perimeter multiple: $\left( \frac{Perimeter^{(PEP)}}{Perimeter^{(bare)}} \right) - 1 \qquad \text{(Equation 33)}$

(continued)

| | | |
|---|---|---|
| Area multiple: | $\left(\dfrac{Area^{(PEP)}}{Area^{(bare)}}\right) - 1$ | (Equation 34) |
| Weight multiple: | $\left(\dfrac{Weight^{(PEP)}}{Weight^{(bare)}}\right) - 1$ | (Equation 35) |
| PAW multiple: | $\left(\dfrac{PAW^{(PEP)}}{PAW^{(bare)}}\right) - 1$ | (Equation 36) |

As mentioned above, the values of certain parameters may be subject to one or more constraints (e.g. geometric constraints, manufacturing constraints and/or design constraints), which may restrict the parameters to having values within a certain range or to take certain specific values.

For example, $H_{fin}$ is subject to a geometric constrain in that the height of each fin must be positive, according to the following:

- $H_{fin} > 0$

As another example of a geometric constraint, it is necessary for the number of fins $N_{fins}$ to be an integer value. In view of this, for given set of values of the other parameters, the possible number of fins may be constrained to a certain range. In certain examples, the minimum and maximum number of fins may be estimated by Equations 37 and 38 below.

Minimum:             (Equation 37)

$$\frac{180}{\cos^{-1}\left(\frac{D - R_{trough} - R_{peak}}{A}\right)}$$     rounded up to nearest integer

Maximum:             (Equation 38)

If

$$\sqrt{A^2 - R_{trough}^2} > \sqrt{D^2 - R_{peak}^2}$$

Then     $$\frac{180}{\sin^{-1}\left(\frac{R_{trough}}{A}\right) + \sin^{-1}\left(\frac{R_{peak}}{D}\right)}$$     rounded down to nearest integer

Else     $$\frac{180}{\cos^{-1}\left(\frac{\left(R_{trough} + R_{peak}\right)^2 - A^2 - D^2}{-2DA}\right)}$$     rounded down to nearest integer

In addition, in practice the fin height $H_{fin}$ must be not greater than $D_{trough}/2$.

Manufacturing constraints may arise due to limitations in the pipe manufacturing process. For example, it may be difficult when using certain manufacturing techniques to form fins having peaks and troughs with radii of curvature lower than certain thresholds. Similarly, it may be difficult when using certain manufacturing techniques to form a PEP tube having an internal diameter less than a certain threshold. In certain examples, the values of $R_{peak}$, $R_{trough}$, $\theta_{trough}$ and $D_{trough}$ may be constrained according to the following.

- $R_{peak} > T_1$, where $T_1$ is a first threshold (e.g. $T_1$ = 1mm)
- $R_{trough} > T_2$, where $T_2$ is a second threshold (e.g. $T_2$ = 2mm)
- $\theta_{trough}$ = (i - 90)/2 > $T_3$, where $T_3$ is a third threshold (e.g. $T_3$ = 30 degrees)
- $D_{trough} > T_4$, where $T_4$ is a fourth threshold (e.g. $T_4$ = 50mm)

Design constraints may arise due to design requirements or preferences. For example, it may be desirable for the weight ratio given by Equation 35 above to be less than a certain value, and/or it may be desirable for the area ratio given by Equation 34 above to fall within a certain range. In certain examples, the area multiple given by Equation 34 and the weight multiple given by Equation 35 may be constrained according to the following.

- Weight multiple < $T_5$, where $T_5$ is a fifth threshold (e.g. $T_5$ = 20%)
- $T_6 \leq$ Area multiple $\leq T_7$, where $T_6$ is a sixth threshold (e.g. $T_6$ = 0%) and $T_7$ is a seventh threshold (e.g. $T_7$=1%)

The sixth and seventh thresholds for defining the constraint on the area multiple may be selected so that the resulting PEP pipe is no smaller than a corresponding bare pipe.

When applying the above technique, it may be necessary (e.g. due to the requirements of the particular optimisation algorithm used) to define bounds on the range of values to be searched for a particular parameter. In this case, if a certain bound (e.g. a lower bound and/or an upper bound) is not dictated by a particular constraint, then that bound may be set to take any suitable value, which may be determined experimentally, empirically or theoretically, for example.

When applying the above technique, values for a certain set of parameters (e.g. $H_{fin}$, $D_{mean}$, $R_{trough}$, $R_{peak}$ and $N_{fins}$ in the above example) may be determined so as to maximise or minimise the value of a certain optimisation function (e.g. PAW, Optimal or Removal in the above example). In certain alternative examples, one or more of these parameters may be set to certain fixed values, thereby reducing the number of parameters to search. For example, $R_{peak}$ may be set to have a fixed value of 1 mm and/or $N_{fins}$ may be set to have a fixed value selected from the range of values given by Equations 37 and 38 above. If both $R_{peak}$ and $N_{fins}$ are set to have fixed values, then the total number of parameters to search is reduced from five to three.

The skilled person will appreciate that one or more factors may be introduced into certain terms of the equations given above, for example to take into account the units (e.g. of weight, distance, area, volume, density etc.) used.

In certain examples, pipes designed according to the above techniques may be characterised by sets of parameters in which one or more of the parameters have certain values, or values falling within a specific range. For example, an exemplary set of pipes designed according to the above techniques may each be characterised by $R_{peak}$=1mm and/or 2.00mm < $R_{trough}$ < 2.10mm.

In certain examples, pipes designed according to the above techniques may be characterised by sets of parameters in which one or more of the parameters have certain relationships between them. For example, an exemplary set of pipes designed according to the above techniques may each be characterised by $R_{trough}$=$F{\times}R_{peak}$, where F is a factor having a specific value (e.g. F=2) of a value falling within a specific range (e.g. $2 \leq F \leq 2.1$).

In certain examples of the present disclosure, the output of the algorithm (i.e. the values of the various parameters) may be converted to data or signals in any suitable format or form for controlling an apparatus for manufacturing a pipe according to a corresponding design. In one exemplary method, in a first step the algorithm is executed to obtain a pipe design comprising a set of parameter values, in a second step the design is provided to a pipe manufacturing apparatus in any suitable format (e.g. as data stored on a data storage medium or as electronic signals), and in a third step the apparatus manufactures a pipe according to the provided design.

The pipe may comprise any suitable type, and may be manufactured according to any suitable method. In certain examples, the pipe may comprise a pipe as described in European patent application number EP99306181.1 with publication number EP0980729 and its equivalents. In certain example, the pipe may be manufactured using a technique described in European patent application number EP99306181.1 with publication number EP0980729 and its equivalents.

For example, the pipe may be a thermal cracking pipe. In certain examples, a method of forming a pipe or tube may comprise centrifugally casting a tube, forming a blank tube, and electrochemically machining the tube to form fins. The profile of the tube may be optimised by employing a technique as described above.

According to some prior techniques, the provision of fins inside a pipe may lead to a significant weight increase. For example, in some designs, a profile as thick as 5-6mm, and fin peaks and troughs each having a radius of curvature of around 3-4mm, may be used. Such a design not only results in a relatively large increase in weight, but also limits the number of fins, thereby limiting the heat transfer. In some prior techniques, the pipe profile may not be optimised, which may potentially lead to an increase in weight of 30% or more by the inclusion of fins in the pipe design.

In a bare tube, exemplary values for certain parameters are:

- $D_{outer}$=136.60 mm
- $D_{inner}$=120.60 mm
- MSW=8.000 mm
- $\rho$=7800.0 kg/m$^3$

These parameter values give the following values:

- Perimeter$^{(bare)}$=378.9 mm
- Area$^{(bare)}$=11423 mm$^2$

- Perimeter$^{(bare)}$/Area$^{(bare)}$=0.033 mm$^{-1}$
- Weight=25.21 kg/m
- PAW=1.32 kg$^{-1}$

In a pipe designed according to the above techniques, exemplary input values for certain parameters are:

- $D_{mean}$=86.54 mm
- $H_{fin}$=6.35 mm
- $R_{trough}$=2.54 mm
- $R_{peak}$=2.54 mm
- $N_{fins}$=60.00

In this case, exemplary output values for certain parameters are:

- $D_{peak}$=117.13 mm
- $D_{mean}$=120.09 mm
- $D_{trough}$=123.05 mm
- $D_{overall}$=139.05 mm
- $N_{fins}$=60
- $R_{trough}$=2.00 mm
- $R_{peak}$=1.00 mm
- $H_{fin}$=2.96 mm

These parameter values give the following values:

- Perimeter$^{(PEP)}$=418.9 mm
- Area$^{(PEP)}$=5881 mm$^2$
- Perimeter$^{(PEP)}$/Area$^{(bare)}$=0.071 mm$^{-1}$
- Weight$^{(PEP)}$=29.72 kg/m
- Removal=830.6mm$^2$
- PAW$^{(PEP)}$=2.40 kg$^{-1}$
- Optimal=4.8% kg$^{-1}$

The above values give the following comparison values:

- Perimeter multiple=49.5%
- Area multiple=0.0%
- P/A multiple=49.5%
- Weight multiple=16.4%
- PAW multiple=28.5%

In certain examples, when applying the above technique, values may be rounded to a given tolerance (e.g. to 0.01 mm or any other suitable value) to reflect rounding and tolerances used or required in the production of Computer-Aided Design (CAD) drawings for manufacturing a pipe, and also in the tube manufacturing process.

It will be appreciated that examples of the present disclosure may be realized in the form of hardware, software or a combination of hardware and software. Any such software may be stored in the form of volatile or non-volatile storage, for example a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like.

It will be appreciated that the storage devices and storage media are examples of machine-readable storage that are suitable for storing a program or programs comprising instructions that, when executed, implement certain examples of the present disclosure. Accordingly, certain examples provide a program comprising code for implementing a method, apparatus and/or system disclosed herein, and a machine-readable storage storing such a program. Still further, such programs may be conveyed electronically via any medium, for example a communication signal carried over a wired or wireless connection, and examples of the present disclosure suitably encompass the same.

While the invention has been shown and described with reference to certain examples, it will be understood by those skilled in the art that various changes in form and detail may be made therein without departing from the scope of the invention, as defined by the appended claims.

**Claims**

1. A method for designing a pipe for use in chemical processing,
   wherein the pipe has a generally annular cross-section comprising an annular outer wall, and further comprising a number of fins provided on the inner surface of the outer wall, and wherein the geometry of the pipe is defined by one or more geometric parameters,
   wherein the method comprises selecting values for the one or more parameters that minimise or maximise an optimisation function,
   wherein the one or more parameters comprise one or more of: the number of fins, $N_{fins}$; the fin height $H_{fin}$; the inner diameter from fin peak to fin peak, $D_{peak}$; the inner diameter from fin trough to fin trough, $D_{trough}$; the inner diameter from fin mid-point to fin mid-point, $D_{mean}$; the fin trough radius of curvature, $R_{trough}$; the fin peak radius of curvature, $R_{peak}$; the outer diameter, $D_{overall}$; and the outer wall thickness, MSW, and
   wherein the optimisation function comprises one or more of:

$$PAW = \left( \frac{\frac{Perimeter}{Area}}{Weight} \right) \qquad \text{(i)}$$

$$Optimal = \frac{PAW \cdot R_{trough}}{H_{fin}} \qquad \text{(ii)}$$

$$Removal = Area - \pi \left( \frac{D_{peak}}{2} \right)^2 \qquad \text{(iii)},$$

where "Perimeter" denotes the internal cross-sectional perimeter, "Area" denotes the internal cross-sectional area, and "Weight" denotes the weight per unit length.

2. A method according to claim 1, wherein selecting values comprises:

   computing one or more of:

$$A = \frac{D_{trough}}{2} - R_{trough} \qquad \text{(iv)}$$

$$B = \sqrt{R_{trough}^2 + A^2 - 2R_{trough}A\cos i} \qquad \text{(v)}$$

$$C = \sqrt{R_{peak}^2 + D^2 - 2R_{peak}D\cos d} \qquad \text{(vi)}$$

$$D = \frac{D_{peak}}{2} + R_{peak} \qquad \text{(vii)}$$

$$E = \sqrt{F^2 - \left(R_{trough} + R_{peak}\right)^2} \qquad \text{(viii)}$$

$$F = \sqrt{A^2 + D^2 - 2AD\cos j} \qquad \text{(ix)}$$

$$a = \cos^{-1}\left(\frac{R_{trough}^2 - A^2 - B^2}{-2AB}\right) \quad \text{(x)}$$

$$b = j - c - a \quad \text{(xi)}$$

$$c = \cos^{-1}\left(\frac{R_{peak}^2 - C^2 - D^2}{-2CD}\right) \quad \text{(xii)}$$

$$d = 180 - i - j \quad \text{(xiii)}$$

$$e = 180 - c - d \quad \text{(xiv)}$$

$$f = 270 - e \quad \text{(xv)}$$

$$g = 180 - f - b \quad \text{(xvi)}$$

$$h = 180 - a - i \quad \text{(xvii)}$$

$$i = \cos^{-1}\left(\frac{D^2 - F^2 - A^2}{-2FA}\right) + \tan^{-1}\left(\frac{E}{R_{trough} + R_{peak}}\right) \quad \text{(xviii)}$$

$$j = \frac{180}{N_{fins}} \quad \text{(xix)}$$

$$k = 180 - i \quad \text{(xx)};$$

then computing one or more of:

$$Perimeter = 2N_{fins}\left(\frac{d}{180}\pi R_{peak} + \frac{k}{180}\pi R_{trough} + E\right) \text{(xxi)}$$

$$Area = N_{fins}\left(AB \sin a + BC \sin b + CD \sin c + \frac{k}{180}\pi R_{trough}^2 - \frac{d}{180}\pi R_{peak}^2\right)$$

$$\text{(xxii)}$$

$$Weight = \left(\pi\left(\frac{D_{overall}}{2}\right)^2 - Area\right)\rho \quad \text{(xxiii)}.$$

where p denotes the pipe density.

3. A method according to claim 2, wherein selecting values further comprises:
setting $N_{fins}$ to a value between a maximum value and a minimum value according to:

Minimum:

(xxiv)

$$\frac{180}{\cos^{-1}\left(\frac{D-R_{trough}-R_{peak}}{A}\right)}$$

rounded up to nearest integer

Maximum:

(xxv)

If

$$\sqrt{A^2 - R_{trough}^2} > \sqrt{D^2 - R_{peak}^2}$$

Then

$$\frac{180}{\sin^{-1}\left(\frac{R_{trough}}{A}\right)+\sin^{-1}\left(\frac{R_{peak}}{D}\right)}$$

rounded down to nearest integer

Else

$$\frac{180}{\cos^{-1}\left(\frac{\left(R_{trough}+R_{peak}\right)^2-A^2-D^2}{-2DA}\right)}$$

rounded down to nearest integer.

4. A method according to claim 1 or 2, wherein selecting values further comprises: computing one or more of:

$$D_{peak} = D_{mean} - H_{fin} \qquad\qquad (xxvi)$$

$$D_{trough} = D_{mean} + H_{fin} \qquad\qquad (xxvii)$$

$$D_{overall} = D_{trough} + 2 \cdot MSW \qquad\qquad (xxviii).$$

5. A method according to any preceding claim, wherein selecting values further comprises applying one or more constraints on one or more of the parameters.

6. A method according to claim 5, wherein the one or more constraints comprise one or more of a geometric constraint, a manufacturing constraint, and a design constraint.

7. A method according to claim 5 or 6, wherein the one or more constraints comprise one or more of.
$H_{fin}<0$,
$R_{peak} > T_1$,
$R_{trough} > T_2$,
$\theta_{trough} = (i-90)/2 > T_3$,
$D_{trough} > T_4$,
Weight multiple $< T_5$,
$T_6 \leq$ Area multiple $\leq T_7$,
$MSW > T_8$,
wherein $T_1$ to $T_8$ are respective thresholds,
wherein $\theta_{trough}$ denotes the internal trough angle,
wherein "Weight multiple" and "Area multiple" are given by:

$$\text{Area multiple} = \left(\frac{Area}{Area^{(bare)}}\right) - 1 \qquad\qquad (xxix)$$

$$\text{Weight multiple} = \left(\frac{Weight}{Weight^{(bare)}}\right) - 1 \qquad \text{(xxx)}$$

where Area$^{(bare)}$ and Weight$^{(bare)}$ denote the internal cross-sectional area and weight per unit length, respectively, of a pipe without fins having an annular cross section with an internal diameter Dinner and outer diameter $D_{outer}$, and are given by:

$$Area^{(bare)} = \pi\left(\frac{D_{inner}}{2}\right)^2 \qquad \text{(xxxi)}$$

$$Weight^{(bare)} = \pi\left(\left(\frac{D_{outer}}{2}\right)^2 - \left(\frac{D_{inner}}{2}\right)^2\right)\rho \qquad \text{(xxxii)}$$

8.  A method according to any preceding claim, further comprising setting one or more of the parameters to respective fixed values.

9.  A method according to any preceding claim, further comprising outputting the selected values for the one or more parameters in a form suitable for controlling an apparatus for making a pipe.

10. A method according to any preceding claim, wherein the method is implemented in the form of a spreadsheet.

11. A method according to any preceding claim, further comprising making a pipe according to the design.

12. A method according to any preceding claim, wherein the pipe is a thermal cracking pipe.

13. An apparatus for designing a pipe for use in chemical processing,
    wherein the pipe has a generally annular cross-section comprising an annular outer wall, and further comprising a number of fins provided on the inner surface of the outer wall, and wherein the geometry of the pipe is defined by one or more geometric parameters,
    wherein the apparatus comprises a selector for selecting values for the one or more parameters that minimise or maximise an optimisation function,
    wherein the one or more parameters comprise one or more of: the number of fins, $N_{fins}$; the fin height $H_{fin}$; the inner diameter from fin peak to fin peak, $D_{peak}$; the inner diameter from fin trough to fin trough, $D_{trough}$; the inner diameter from fin mid-point to fin mid-point, $D_{mean}$; the fin trough radius of curvature, $R_{trough}$; the fin peak radius of curvature, $R_{peak}$; the outer diameter, $D_{overall}$; and the outer wall thickness, MSW, and
    wherein the optimisation function comprises one or more of:

$$PAW = \left(\frac{Perimeter}{Area} \Big/ Weight\right) \qquad \text{(i)}$$

$$Optimal = \frac{PAW \cdot R_{trough}}{H_{fin}} \qquad \text{(ii)}$$

$$Removal = Area - \pi\left(\frac{D_{peak}}{2}\right)^2 \qquad \text{(iii),}$$

where "Perimeter" denotes the internal cross-sectional perimeter, "Area" denotes the internal cross-sectional area, and "Weight" denotes the weight per unit length.

14. A method of making a thermal cracking pipe, the method comprising:

centrifugally casting a tube;
forming a blank tube; and
electrochemically machining the tube to form fins,
wherein the tube profile is optimised by employing a method according to any of claims 1 to 10.

15. A computer readable storage medium having stored thereon a computer program comprising instructions which, when executed by a processor, cause the processor to perform a method according to any of claims 1 to 12 and 14.

Figure 1

Figure 2

Figure 4

Figure 3

Figure 5

Europäisches
Patentamt

European
Patent Office

Office européen
des brevets

**EUROPEAN SEARCH REPORT**

Application Number

EP 19 15 0549

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/133864 A1 (STIER RANDY SCOTT [US]) 28 May 2009 (2009-05-28) * paragraphs [0012], [0035], [0037] - paragraph [0038]; claim 1; figures 1-4; examples 1-5; table 1 * | 1-15 | INV. C10G9/20 B21D53/02 B21D53/06 B21C1/22 F28F1/40 F28F1/10 G06F17/50 |
| X | US 2005/045319 A1 (LETERRIBLE PASCAL [FR] ET AL) 3 March 2005 (2005-03-03) * paragraphs [0016] - [0022], [0027], [0079] - paragraphs [0110], [0112]; claim 1; figures 1-3 * | 1-15 | |
| X | EP 0 591 094 A1 (CARRIER CORP [US]) 6 April 1994 (1994-04-06) * column 3, line 11 - column 4, line 24; claim 1; figure 3 * | 1-15 | |
| X | EP 0 148 609 A2 (HITACHI CABLE [JP]) 17 July 1985 (1985-07-17) * page 3, line 6 - line 11; claim 1 * * page 4, line 1 - line 15 * * page 6, line 23 - page 12, line 16 * | 1-15 | |
| X | WO 98/56872 A1 (EXXON CHEMICAL PATENTS INC [US]) 17 December 1998 (1998-12-17) * page 2, line 22 - line 28; claim 1; figures 1-3; example 1 * * page 10, line 5 - line 23 * | 1-15 | TECHNICAL FIELDS SEARCHED (IPC) C10G B21L G06F F28F B21D B21C |
| X | US 2005/131263 A1 (WOLPERT PETER [DE] ET AL) 16 June 2005 (2005-06-16) * paragraphs [0317], [0000], [0033], [0038] - paragraphs [0055], [0061], [0065], [0066]; claims 14,32; figure 3 * | 1-15 | |

-/--

The present search report has been drawn up for all claims

| Place of search | Date of completion of the search | Examiner |
|---|---|---|
| The Hague | 8 April 2019 | Deurinck, Patricia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 19 15 0549

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 0 980 729 A1 (DONCASTERS PLC [GB]) 23 February 2000 (2000-02-23) * paragraphs [0028], [0049], [0057], [0070] - paragraph [0073]; claim 1; figures 1-3 * | 1-15 | |

TECHNICAL FIELDS
SEARCHED      (IPC)

The present search report has been drawn up for all claims

| Place of search | Date of completion of the search | Examiner |
|---|---|---|
| The Hague | 8 April 2019 | Deurinck, Patricia |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 19 15 0549

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2019

| Patent document cited in search report | Publication date | Patent family member(s) | Publication date |
|---|---|---|---|
| US 2009133864 A1 | 28-05-2009 | US 2009133864 A1<br>US 2011030937 A1<br>WO 2009073340 A1 | 28-05-2009<br>10-02-2011<br>11-06-2009 |
| US 2005045319 A1 | 03-03-2005 | AT 347083 T<br>DE 602004003422 T2<br>DK 1482269 T3<br>EP 1482269 A2<br>ES 2278241 T3<br>FR 2855601 A1<br>PT 1482269 E<br>US 2005045319 A1 | 15-12-2006<br>21-02-2008<br>02-04-2007<br>01-12-2004<br>01-08-2007<br>03-12-2004<br>30-03-2007<br>03-03-2005 |
| EP 0591094 A1 | 06-04-1994 | BR 9303895 A<br>CN 1087162 A<br>EP 0591094 A1<br>JP H06201286 A | 19-04-1994<br>25-05-1994<br>06-04-1994<br>19-07-1994 |
| EP 0148609 A2 | 17-07-1985 | DE 3472000 D1<br>EP 0148609 A2<br>ES 290960 U<br>JP H0421117 B2<br>JP S60142195 A<br>US 4658892 A | 14-07-1988<br>17-07-1985<br>16-05-1986<br>08-04-1992<br>27-07-1985<br>21-04-1987 |
| WO 9856872 A1 | 17-12-1998 | AR 015388 A1<br>AT 208417 T<br>AT 272697 T<br>AU 737015 B2<br>BR 9811468 A<br>CA 2290540 A1<br>CN 1259981 A<br>DE 69802404 T2<br>DE 69825494 T2<br>EP 0993497 A1<br>EP 1136541 A1<br>ES 2225400 T3<br>HU 0003033 A2<br>ID 24474 A<br>JP 4819205 B2<br>JP 2002504170 A<br>KR 20010013526 A<br>MY 122107 A<br>NO 327767 B1<br>PL 337179 A1<br>PT 1136541 E | 02-05-2001<br>15-11-2001<br>15-08-2004<br>09-08-2001<br>19-09-2000<br>17-12-1998<br>12-07-2000<br>18-07-2002<br>28-07-2005<br>19-04-2000<br>26-09-2001<br>16-03-2005<br>28-06-2001<br>20-07-2000<br>24-11-2011<br>05-02-2002<br>26-02-2001<br>31-03-2006<br>21-09-2009<br>14-08-2000<br>31-12-2004 |

EPO FORM P0459

For more details about this annex : see Official Journal of the European Patent Office, No. 12/82

## EP 3 508 557 A1

## ANNEX TO THE EUROPEAN SEARCH REPORT
## ON EUROPEAN PATENT APPLICATION NO.

EP 19 15 0549

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2019

| Patent document cited in search report | Publication date | Patent family member(s) | | Publication date |
|---|---|---|---|---|
| | | RU | 2211854 C2 | 10-09-2003 |
| | | TW | 387933 B | 21-04-2000 |
| | | US | 2002034463 A1 | 21-03-2002 |
| | | US | 2002159934 A1 | 31-10-2002 |
| | | WO | 9856872 A1 | 17-12-1998 |
| | | ZA | 9805021 B | 25-01-1999 |
| US 2005131263 A1 | 16-06-2005 | US | 2005131263 A1 | 16-06-2005 |
| | | US | 2008135223 A1 | 12-06-2008 |
| EP 0980729 A1 | 23-02-2000 | BR | 9903874 A | 13-03-2001 |
| | | CA | 2280239 A1 | 20-02-2000 |
| | | CZ | 295409 B6 | 17-08-2005 |
| | | DE | 69900043 T2 | 09-08-2001 |
| | | EP | 0980729 A1 | 23-02-2000 |
| | | ES | 2154501 T3 | 01-04-2001 |
| | | GB | 2340911 A | 01-03-2000 |
| | | JP | 3094022 B2 | 03-10-2000 |
| | | JP | 2000064098 A | 29-02-2000 |
| | | US | 6250340 B1 | 26-06-2001 |
| | | US | 2001054449 A1 | 27-12-2001 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 99306181 A

- EP 0980729 A

**Non-patent literature cited in the description**

- evolutionary solver. *Excel,* 2016